(19) 

**Europäisches Patentamt**
**European Patent Office**
**Office européen des brevets**

(11) **EP 3 300 871 A1**

(12) **EUROPEAN PATENT APPLICATION**

(43) Date of publication:
04.04.2018 Bulletin 2018/14

(51) Int Cl.:
*B29B 11/06* (2006.01)  *B29C 44/34* (2006.01)

(21) Application number: 17171784.6

(22) Date of filing: 18.05.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 30.09.2016 US 201662401936 P
28.04.2017 US 201715581207

(71) Applicant: **LCY Chemical Corp.**
**Kaohsiung City 812 (TW)**

(72) Inventor: **Lin, Chiang-Hsiang**
**702 Tainan City (TW)**

(74) Representative: **Kretschmann, Dennis**
**Boehmert & Boehmert**
**Anwaltspartnerschaft mbB**
**Pettenkoferstrasse 22**
**80336 München (DE)**

(54) **LINEAR POLYPROPYLENE SPECIMEN AND FOAM AND PROCESS OF PREPARING THE SAME**

(57) The present disclosure provides a process of preparing linear polypropylene foam, comprising the following steps: (a) preparing a specimen comprising at least one linear polypropylene; and at least one nucleating agent selected from the group consisting of alpha nucleating agents and beta nucleating agents; (b) deforming the specimen under a deforming pressure and at a deforming temperature for a period of time; and (c) subjecting the deformed specimen obtained in the step (b) to a foaming process to obtain the linear polypropylene foam. The present disclosure further provides a specimen after PIF treatment and a linear polypropylene foam prepared by the above process.

FIG. 3A

EP 3 300 871 A1

**Description**

CROSS REFERENCE TO RELATED APPLICATION

This application claims the benefit of filing date of U. S. Provisional Application Serial Number 62/401,936, filed September 30, 2016.

This application also claims the benefit of filing date of U. S. Application Serial Number 15/581,207, filed April 28, 2017.

BACKGROUND

1. Field of the Invention

The present disclosure relates to a linear polypropylene specimen and foam and a process of preparing the same and, more particularly, to a linear polypropylene specimen after pressure-induced flow (PIF) treatment, a linear polypropylene foam with low density and uniform and controlled cellular structure and a process of preparing the same.

2. Description of Related Art

Polymeric foam, in general, at least comprises: (1) a polymer matrix providing structure and support and (2) gaseous voids or bubbles (also referred to as "cells"). Since polymeric foam comprises cells, polymeric foams have low thermal conductivity and good thermal insulative properties. Typical applications of polymeric foams include drink foam cups, food containers or trays, packaging, insulation, automotive, sports, and medical applications.

In general, the polymeric foam is prepared by a foaming process by introducing gas or blowing agents into a polymer-based specimen, allowing the bubbles to grow and stabilize in the polymer-based specimen to obtain the polymeric foam. Polystyrene (PS) foams are the earliest and most developed kind of polymeric foam, while other polymeric foams also have been developed and used. Typical PS foams, however, cannot be easily recycled and are therefore disfavored for environmental and cost reasons.

Unlike PS, polypropylene (PP) has the potential for recycling, so many manufacturers desire to develop PP foams to solve the problem that the PS foams cannot be easily recycled. However, because of the melt strength of the linear PP is low, the obtained polymeric foam bear poor cell integrity and/or open cells structure. *See e.g.,* EP 1 479 716. In contrast, high melt strength polypropylene (HMS-PP), which are long-chain branched polypropylene (i.e., containing long side arms coming off the backbone), has been successfully used to produce low density polymeric foam. Specifically, the addition of HMS-PP leads to a better balance of the rate of crystallization and the rate of bubble growth. As such, low density polymeric foam with uniform and controlled cellular structure has been produced with the combination of linear polypropylene and high melt strength polypropylene. *See e.g.*, EP 1 479 716. The manufacturing cost associated with HMS-PP, however, remains relatively high, making the HMS-PP foams less market competitive than polystyrene foams.

Hence, it is desirable to provide a novel method for preparing polyolefin foam, especially PP foam prepared with linear PP, which can manufacture polyolefin foam in a promising and feasible way; and therefore, the obtained polyolefin foam can be successfully used in industrial applications.

SUMMARY

The inventors of the present disclosure surprisingly discovered that, contrary to conventional wisdom, linear polypropylene, when formulated with alpha and/or beta nucleating agents and treated with pressure-induced flow (PIF) processing, can provide polymeric foams with properties comparable to or better than polymeric foams made from HMS-PP and EPP beads.

Thus, the present disclosure provides linear polypropylene foams having, for example, high tensile strength, impact strength, and processes for making said linear polypropylene foams.

The present disclosure provides a composition for preparing a linear polypropylene foam, said composition comprising at least one linear polypropylene; and at least one nucleating agent selected from the group consisting of alpha ($\alpha$) nucleating agents and beta ($\beta$) nucleating agents. Herein, the composition for preparing a linear polypropylene foam can be formulated into pellets; and then the pellets are molded into a specimen for the sequentially process of preparing the linear polypropylene foam.

The present disclosure further provides a process of preparing linear polypropylene foam, comprising the following steps: (a) preparing the aforementioned specimen; (b) deforming the specimen under a deforming pressure and at a deforming temperature for a period of time to obtain a deformed specimen; and (c) subjecting the deformed specimen obtained in the step (b) to a foaming process to obtain the linear polypropylene foam.

The present disclosure further provides a linear polypropylene specimen, comprising: at least one linear polypropylene; and at least one nucleating agent selected from the group consisting of alpha nucleating agents and beta nucleating agents, wherein the linear polypropylene specimens under PIF (Pressure-Induced Flow) has an Izod impact strength ranging from 40 kg-cm/cm to 100 kg-cm/cm.

The present disclosure also provides a linear polypropylene foam, comprising: at least one linear polypropylene; and at least one nucleating agent selected from the group consisting of alpha nucleating agents and beta nucleating agents, wherein the linear polypropylene foam has an Izod impact strength ranging from 20 kg-cm/cm to 60 kg-cm/cm.

Herein, the term "linear polypropylene" refers to: (i) homopolymers of propylene (as non-limiting examples, Globalene® PC366-3 supplied by LCY Chemical Corp.); (ii) random copolymer comprising at least 90 mole% of propylene and one or more monomers selected from ethylene and butene (as non-limiting examples, Globalene® 8001, ST611 or ST925 supplied by LCY Chemical Corp.); (iii) heterophasic (impact) copolymer comprising ethylene propylene rubber (EPR) dispersed within polypropylene homopolymer matrix (as non-limiting examples, Globalene® 7633, 7633U or 7011 supplied by LCY Chemical Corp.); and combinations thereof; and (iv) any combinations of (i)-(iii).

The term "polymer composition" refers to a mixture comprising polypropylene and nucleating agents, which can be treated with, for example, extruding process, molding process, and/or cutting process and formulated into particles such as pellets.

The term "specimen" refers to a sample or a product which is obtained after the polymer composition is molded into a specific shape, for example, sheets, plates or bulks.

The term "linear polypropylene foam" refers to polymeric foam prepared from linear polypropylene or from polymers comprising at least 95%, such as at least 96%, 97%, 98%, 99%, or 99.5% by weight, based on the total weight of the polymers, of linear polypropylene. In some embodiments of the present disclosure, the linear polypropylene foam is a polymeric foam comprising less than 5%, such as less than 4%, 3%, 2%, 1%, or 0.5%, based on the total weight of the polymers, of high melt strength polypropylene (HMS-PP). In some embodiments, the liner polypropylene foam does not contain any HMS-PP.

It is known that the linear polypropylene is very difficult to be foamed due to its low melt strength and high crystallinity. In the present disclosure, a novel process is provided, wherein the linear polypropylene is deformed through the pressure-induced flow (PIF) process and foamed through the foaming process. By using the process of the present disclosure, the linear polypropylene can be but not limited to be foamed under less strict conditions (lower pressure with higher temperature), and short pressure saturation time to obtain low-density linear polypropylene foam with high performance. Hence, compared to the conventional process for preparing the linear polypropylene foam without the PIF process, the obtained linear polypropylene foam of the present disclosure has low density, and uniform and controlled cellular structure.

On the other hand, at room temperature, polypropylene is a semi-crystalline material containing amorphous and ordered crystalline regions. Polypropylene can crystallize into several crystalline forms according to the crystallization conditions. The most thermodynamically stable form is the $\alpha$ or monoclinic form. Another crystalline form of polypropylene, the $\beta$ or hexagonal form, can be obtained via crystallization in shear field, temperature gradient crystallization, or by the use of nucleating agents that preferentially crystalize the $\beta$ from.

Nucleating agents can be organic or inorganic. When the nucleating agents are used, one or more functions such as increasing the crystallization rate, providing a higher degree of crystallinity, resulting in a more uniform crystalline structure, and/or improving mechanical properties can be provided. As used herein, alpha ($\alpha$) nucleating agent can be organic or inorganic. When the alpha nucleating agent is added, the crystallization rate of $\alpha$ crystal may be increased and/or a higher degree of $\alpha$ crystallinity can be achieved. As used herein, beta ($\beta$) nucleating agent can be organic or inorganic. When the beta nucleating agent is added, the crystallization rate of $\beta$ crystal may be increased and/or a higher degree of $\beta$ crystallinity can be achieved.

In the present disclosure, when the composition for preparing the linear polypropylene foam comprises one of or both the $\alpha$ and $\beta$ nucleating agents, the cell size of the obtained linear polypropylene foam can further be controlled, the cells in the linear polypropylene foam can uniformly distribute, the expansion ratio of the linear polypropylene foam can be increased, and/or the mechanical properties of the linear polypropylene foam can further be improved.

### Composition for preparing the linear polypropylene foam

In the present disclosure, a composition comprising: at least one linear polypropylene; and at least one nucleating agent selected from the group consisting of alpha ($\alpha$) nucleating agents and beta ($\beta$) nucleating agents, is suitable for preparing linear polypropylene foams.

In some embodiments, the at least one linear polypropylene is present in an amount of at least 80%, such as 85%, 90%, 95%, or 98% by weight of the composition.

In some embodiments, the at least one linear polypropylene has a melt flow rate (MFR) ranging from 0.1 g/10 min to 20 g/10 min. As non-limiting examples, the at least one linear polypropylene may have a MFR ranging from 1 g/10 min to 15 g/10 min, such as from 2 g/10 min to 8 g/10 min, 3 g/10 min to 5 g/10 min, or 1.5 g/10 min to 5 g/10 min. Because the process for preparing the linear polypropylene foam comprises the PIF process, the MFR of the linear polypropylene contained in the composition can further be broadened.

MFR is an indirect measure of molecular weight. High MFR corresponds to low molecular weight. Additional information regarding the test conditions for measuring MFR can be found in the International Organization for Standardization (ISO) 1133 or ASTM D 792. The MFR of polypropylene is generally measured under a load of 2.16 kg and at 230°C.

In some embodiments, the at least one linear polypropylene can be selected from random copolymers of propylene and at least one co-monomer selected from ethylene or/and butene. In some embodiment, the at least one co-monomer is present in an amount ranging from 1% to 6% by weight of the copolymer. In some embodiments, the random copolymer may have a weight average molecular weight ranging from 300,000 to 420,000. As non-limiting examples of random copolymer of propylene: Globalene® 8001, 8181, PT103, 6181, ST611, ST611K, ST611M, ST866, ST866M, ST866K, ST868M, ST868K, 8681 or ST925 supplied by LCY Chemical Corp.

In some embodiments, the at least one linear polypropylene can be selected from homopolymers of propylene. As non-limiting examples, the homopolymers of propylene may have a weight average molecular weight ranging from 300,000 to 420.000. Further as non-limiting examples of homopolymers of propylene: Globalene® PT181, PT100, PC366-3, PT101N, PD402, 6524, or PC366-4, PC366-5, 6331, 6231-20 supplied by LCY Chemical Corp.

In some embodiments, the at least one linear polypropylene can be selected from heterophasic (impact) copolymers of propylene comprising ethylene propylene rubber (EPR) dispersed within polypropylene homopolymer matrix. In some embodiments, the amount of co-monomer (for example, ethylene) is no more than 15% by weight of the impact copolymer. In some embodiments, the impact copolymer may have a weight average molecular weight ranging from 300,000 to 420,000. As non-limiting examples of impact copolymer of propylene: Globalene® 7011, 7633, 7633-3, 7633U, 7533, 7433, 7433-9, 749U or ST031 supplied by LCY Chemical Corp.

In some embodiments, the composition for preparing linear polypropylene foam comprises at least one homopolymer of propylene and at least one random copolymer of propylene. In one exemplary embodiment, the weight ratio of the at least one homopolymer of propylene to the at least one random copolymer of propylene ranges from 1:9 to 9:1, such as from 2:8 to 8:2, from 3:7 to 7:3, or from 4:6 to 6:4. In another exemplary embodiment, the weight ratio of the at least one homopolymer of propylene to the at least one random copolymer of propylene is 1:1.

In some embodiments, the composition for preparing linear polypropylene foam comprises at least one random copolymer of propylene and at least one impact copolymer of propylene. In one exemplary embodiment, the weight ratio of the at least one random copolymer of propylene to the at least one impact copolymer of propylene ranges from 1:9 to 9:1, such as from 2:8 to 8:2, from 3:7 to 7:3, or from 4:6 to 6:4. In another exemplary embodiment, the weight ratio of the at least one random copolymer of propylene to the at least one impact copolymer of propylene is 1:1.

In some embodiments, the composition for preparing linear polypropylene foam comprises at least one homopolymer of propylene and at least one impact copolymer of propylene. In one exemplary embodiment, the weight ratio of the at least one homopolymer of propylene to the at least one impact copolymer of propylene ranges from 1:9 to 9:1, such as from 2:8 to 8:2, from 3:7 to 7:3, or from 4:6 to 6:4. In another exemplary embodiment, the weight ratio of the at least one homopolymer of propylene to the at least one impact copolymer of propylene is 1:1.

In some embodiments, the composition for preparing a linear polypropylene foam comprises at least one homopolymer of propylene, at least one random copolymer of propylene, and at least one impact copolymer of propylene.

In some embodiments, the at least one alpha nucleating agent is selected from organic alpha nucleating agents such as sorbitol derivatives including but not limited to 1,2,3,4-bis-dibenzylidene sorbitol (DBS), 1,2,3,4-bis-(3,4- dimethylbenzylidene sorbitol) (MBDS), 1,2,3,4-bis-(p-methoxybenzylidene sorbitol) (DOS), 1,3:2,4-di(3,4- dimethylbenzylidene) sorbitol (DMDBS), and bis(4-propylbenzylidene) propyl sorbitol; monovalent, bivalent, and trivalent 2,2'-methylene-bis-(4,6-di-tertbutylphenyl) phosphate metal salts (e.g., sodium 2,2'-methylene-bis-(4,6-di-t-butylphenylene)phosphate, known commercially as NA-11, magnesium salt (NA-12), zinc salt (NA-30), bivalent calcium salt (NA-20), and trivalent aluminum salt (NA-13)); sodium benzoate; lithium benzoate; 1,2-cyclohexanedicarboxylic acid (e.g., Hyperform® HPN-20E from Milliken & Company, which is a calcium salt of 1,2-cyclohexanedicarboxylic acid).

In some embodiments, the at least one alpha nucleating agent is selected from inorganic alpha nucleating agents such as calcium salts, mica, silica, kaolin, diatomite, talc, wollastonite and carbon nanotubes.

In some embodiments, the at least one alpha nucleating agent is present in an amount ranging from 0.01% to 5% by weight, relative to the total weight of the composition. Further as non-limiting examples, the at least one alpha nucleating agent may be present in an amount ranging from 0.01 % to 4 %, such as from 0.05% to 4%, from 0.05% to 3%, from 0.1 % to 3%, from 0.5% to 3%, or from 0.5 % to 2 % by weight, relative to the total weight of the composition.

In some embodiments, the at least one alpha nucleating agent is present in an amount ranging from 0.01 to 5 parts per hundred resin ("phr," where "hundred resin" means 100 parts of polymer(s)). Further as non-limiting examples, the at least one alpha nucleating agent may be present in an amount ranging from 0.01 to 4 phr, such as from 0.05 to 4 phr, from 0.05 to 3 phr, from 0.1 to 3 phr, from 0.5 to 3 phr, or from 0.5 to 2 phr.

In some embodiments, the at least one beta nucleating agent can be selected from: N-N'-dicyclohexyl 2-6-naphthalene dicarboximide (known under the trade name NJ Star NU-100), aluminum salts of 6-quinazirin sulfonic acid, phthalic acid disodium salt, isophthalic acid, terephthalic acid, blends of organic dibasic acid and oxide, hydroxide, or acid of a Group II metal, such as acids of Mg, Ca, St, and Ba.

In some embodiments, the at least one beta nucleating agent can be selected from (i) quinacridone type compounds, such as dimethylquinacridone, quinacridone, and dimethoxyquinacridone, (ii) quinacridonequinone type compounds, such as quinacridonequinone, a mixed crystal of 5,12-dihydro(2,3b)acridine-7,14-dione with quino(2,3b)acridine-6,7,13,14-(5H,12H)-tetrone as disclosed in EP 0 177 961 and dimethoxyquinacridonequinone; and (iii) dihydroquinacridone type compounds, such as di-methoxydihydroquinacridone, dihydroquinacridone, and dibenzodihydroquinacridone.

In some embodiments, the at least one beta nucleating agent can be selected from dicarboxylic acid salts of metals from group IIa of periodic table, such as pimelic acid calcium salt and suberic acid calcium salt.

In some embodiments, the at least one beta nucleating agent is present in an amount ranging from 0.01% to 2% by weight, relative to the total weight of the composition. Further as non-limiting examples, the at least one beta nucleating agent may be present in an amount ranging from 0.03% to 2%, such as from 0.03% to 1%, 0.03% to 0.5%, or 0.05% to 0.5% by weight, relative to the total weight of the composition.

In some embodiments, the at least one beta nucleating agent is present in an amount ranging from 0.01 to 2 phr. Further as non-limiting examples, the at least one beta nucleating agent may be present in an amount ranging from 0.03 to 2 phr, such as from 0.03 to 1 phr, 0.03 to 0.5 phr, or 0.05 to 0.5 phr.

In some embodiments, the composition for preparing linear polypropylene foam may optionally further comprise one or more additives selected from, as non-limiting examples, UV-stabilizers, blowing agents, fillers, anti-dripping agents, flame retardants, anti-static agents, cell stabilizers, thermostabilizers, colorants, dyes, acid reducing agents, impact modifiers, polyolefins elastomer, thermoplastic elastomers, thermoplastic vulcanizates, lubricants, pigments, antioxidants, antibacterial agents, and processing aids. Additional additives may include filler materials such as glass fiber, calcium carbonate, and carbon black. The one or more optional additives may be present in an amount not adversely affecting the properties or formation of the linear polypropylene foam. As a non-limiting example, the one or more optional additives may be present in an amount ranging from 0.0001% to 15%, such as from 0.01% to 10% or 0.1% to 5% by weight based on the total weight of the composition.

In some embodiments, suitable blowing agents include organic blowing agents, non-hydrocarbon blowing agents, chemical blowing agents, and combinations thereof. A possible combination of blowing agents is, for example, a non-hydrocarbon and a chemical blowing agent, or an organic and a chemical blowing agent, or a non-hydrocarbon, an organic, and a chemical blowing agent.

Organic blowing agents may include but not limited to: aliphatic hydrocarbons having 1-9 carbon atoms, aliphatic alcohols having 1-3 carbon atoms, aliphatic ketones having 1-3 carbon atoms, aliphatic esters having 1-3 carbon atoms, aliphatic ethers having 1-4 carbon atoms, fully and partially halogenated aliphatic hydrocarbons having 1-4 carbon atoms, and combinations thereof. As non-limiting examples, aliphatic hydrocarbons include methane, ethane, propane, n-butane, isobutane, n-pentane, isopentane, cyclopentane, neopentane, and petroleum ether. Also as non-limiting examples, aliphatic alcohols include methanol, ethanol, n-propanol, and isopropanol. Further as non-limiting examples, aliphatic ketones include acetone; aliphatic esters include methyl formate; aliphatic ethers include diethyl ether and dimethyl ether; fully and partially halogenated aliphatic hydrocarbons include fluorocarbons, chlorocarbons, and chlorofluorocarbons; chlorofluorocarbons and fluorocarbons include 1,1-dichloro-1-fluoro-ethane, 1,1,1,4,4,4-hexafluoro-2-butene, 2,2-dichloro-1,1,1-trifluoroethane, 1-chloro-1,1-difluoroethane (HCFC-142b), 1-chloro-1,2-difluoro-ethane (HCFC-142a), 1,1,1,2-tetrafluoroethane, 1,1,1,3,3-pentafluoropropane, 1,1,1,3,3-pentafluorobutane, 2-chloropropane, 1,2-dichloro-1,1,2,2-tetrafluoroethane, 1-chloro-1,2-difluoro-ethane, trichlorotrifluoroethane and/or trichloromono-fluoromethane (CFC-11), dichlorodifluoromethane (CFC-12), as well as mixtures of 1-chloro-1,2-difluoroethane (HCFC-142a) and 1-chloro-1,1-difluoroethane (HCFC-142b), 1,3,3,3-tetrafluoropropene (HFO-1234ze), 1,1-difluoroethane (HFC-152a), 1,1,1,2-tetrafluorethane (HFC-134a) and chlorodifluoromethane (R22).

In some embodiments, organic blowing agents include n-butane, iso-butane, ethanol, isopropanol, dimethyl ether, and mixtures thereof.

Non-hydrocarbon blowing agents may include but not limited to: carbon dioxide, nitrogen, argon, water, air, nitrous oxide, helium, and combinations thereof. In some embodiments, the non-hydrocarbon blowing agent is carbon dioxide.

Chemical blowing agents may include but not limited to azocarbonate-based and hydrazide-based compounds, such as azodicarbonamide, benzenesulphonyl hydrazide, 4,4'-oxy-bis-(benzenesulfonyl semicarbazide), azodiisobutyronitrile, organic acids and their derivatives, alkali metal carbonates, alkali metal bicarbonates, and mixtures thereof.

As non-limiting examples, chemical blowing agents may be selected from organic acids and acid derivatives, and may include oxalic acid and oxalic acid derivatives, adipic acid and adipic acid derivatives, succinic acid and succinic acid derivatives, phthalic acid and phthalic acid derivatives, and citric acid, citric acid salts, and citric acid esters, and mixtures thereof. Further as non-limiting examples, citric acid esters include those of higher alcohols, such as stearyl or lauryl citrate, and both mono- and diesters of citric acid with lower alcohols having 1-8 carbon atoms; lower alcohols from which these citric acid esters can be formed are, for example: methanol, ethanol, propanol, isopropanol, n-butanol, iso-butanol, sec-butanol, tert-butanol, n-pentanol, n-pentan-2-ol, n-pentan-3-ol, n-hexan-3-ol and isomeric hexanols, n-heptan-1-ol, n-heptan-2-ol, n-heptan-3-ol, n-heptan-4-ol and isomeric heptanols, n-octan-1-ol, n-octan-2-ol, n-octan-3-ol, n-octan-4-ol and isomeric octanols, cyclopentanol, and cyclohexanol; diols or polyols with 1-8 carbon atoms may be used, such as ethylene glycol, glycerol, pentaerythritol or lower polyethylene glycols, for example diethylene glycol, triethylene glycol or tetraethylene glycol; the mono- or diesters with monohydric alcohols having 1-6 carbon atoms, for instance, the monoesters, such as monomethyl citrate, monoethyl citrate, monopropyl citrate, monoisopropyl citrate, mono-n-butyl citrate, and mono-tert-butyl citrate.

Further as non-limiting examples of chemical blowing agents include alkali or earth alkali metal carbonates, alkali or earth alkali metal bicarbonates, such as magnesium carbonate, calcium carbonate, magnesium bicarbonate, calcium bicarbonate, ammonium bicarbonate, sodium carbonate, and potassium carbonates.

In some embodiments, the composition for preparing a linear polypropylene foam further comprises at least one blowing agent selected from $CO_2$, n-butane, iso-butane, ethanol, isopropanol, dimethyl ether, citric acid, sodium bicarbonate, and mixtures thereof.

In some embodiments, the blowing agent is present in an amount ranging from 0% to 10%, such as 0.1% to 5% or 0.5% to 4% by weight, relative to the total weight of the composition.

### Linear polypropylene specimen and foam

In the present disclosure, after the aforementioned composition for preparing a linear polypropylene foam is molded to obtain a specimen, the specimen is subjected to a PIF process to obtain a deformed specimen, and then the deformed specimen is subjected to a foaming process to obtain a linear polypropylene foam. Herein, the obtained linear polypropylene specimen or foam may comprise: at least one linear polypropylene; and at least one nucleating agent selected from the group consisting of alpha nucleating agents and beta nucleating agents.

All the embodiments described above regarding the types and the amounts of the at least one linear polypropylene, the at least one alpha nucleating agent, the at least one beta nucleating agent, and the optional one or more additive also apply to the linear polypropylene specimen or foam.

For example, in some embodiments, the linear polypropylene specimen or foam may comprise (i) at least 80% by weight of the at least one linear polypropylene; and (ii) 0.01% to 5% by weight of the at least one alpha nucleating agent, and/or (iii) 0.05% to 2% by weight of the at least one beta nucleating agent. In some embodiment, the linear polypropylene foam may further comprise (iv) 0% to 15% by weight of one or more additives as described above.

In some embodiments, the linear polypropylene foam has a density, as measured according to ASTM D 792, of no more than about 0.1 $g/cm^3$. For example, in some embodiments, the linear polypropylene foam has a density ranging from 0.01 $g/cm^3$ to 0.08 $g/cm^3$, such as from 0.01 $g/cm^3$ to 0.06 $g/cm^3$, from 0.01 $g/cm^3$ to 0.05 $g/cm^3$, from 0.02 $g/cm^3$ to 0.06 $g/cm^3$, from 0.03 $g/cm^3$ to 0.06 $g/cm^3$, or from 0.03 $g/cm^3$ to 0.05 $g/cm^3$.

In some embodiments, the linear polypropylene foam has an expansion ratio (i.e., the ratio of the bulk density of unfoamed polymer composition to the bulk density of the foam sample) of no less than about 10. For example, in some embodiments, the linear polypropylene foam has an expansion ratio ranging from 10 to 50, such as from 10 to 40, 10 to 30, 10 to 20, or 10 to 15. Further as an example, in some embodiments, the linear polypropylene foam has an expansion ratio ranging from 10 to 50, 10 to 40, 10 to 30, 10 to 20, 20 to 50, 20 to 40, 20 to 30, or 30 to 50.

In some embodiments, the linear polypropylene specimen has an Izod impact strength, as measured according to ASTM D256 (at 23°C, notched), of no less than 8 kg-cm/cm. For example, in some embodiments, the linear polypropylene specimen has an Izod impact strength ranging from 8 kg-cm/cm to 100 kg-cm/cm, such as from 20 kg-cm/cm to 100 kg-cm/cm, 40 kg-cm/cm to 100 kg-cm/cm, 60 kg-cm/cm to 100 kg-cm/cm, or 80 kg-cm/cm to 100 kg-cm/cm.

In some embodiments, the linear polypropylene foam has an Izod impact strength, as measured according to ASTM D256 (at 23°C, notched), of no less than 8 kg-cm/cm. For example, in some embodiments, the linear polypropylene specimen has an Izod impact strength ranging from 8 kg-cm/cm to 60 kg-cm/cm, such as from 20 kg-cm/cm to 60 kg-cm/cm, or 40 kg-cm/cm to 60 kg-cm/cm.

In some embodiments, the linear polypropylene foam has a cell-size (i.e., the average cell diameter) ranging from 10 $\mu$m to 200 $\mu$m. For example, in some embodiments, the linear polypropylene foam has a cell-size ranging from 40 $\mu$m to 100 $\mu$m, such as from 80 $\mu$m to 100 $\mu$m. Further as non-limiting examples, in some embodiments, the linear polypropylene foam has a cell-size from 30 $\mu$m to 40 $\mu$m. In some embodiments, the material has a cell-size from 20 $\mu$m to 80 $\mu$m, from 20 $\mu$m to 70 $\mu$m, from 20 $\mu$m to 60 $\mu$m, or from 20 $\mu$m to 50 $\mu$m. In some embodiments, the material has a cell-size from 5 $\mu$m to 50 $\mu$m, such as from 5 $\mu$m to 40 $\mu$m, or from 10 $\mu$m to 30 $\mu$m. The average cell diameter can be measured by taking cross-sectional images of the foam and used the Image Pro software to calculate the average cell diameter with the following equation:

$$D = \frac{\sum d_i n_i}{\sum n_i}$$

wherein $n_i$ is the number of cells with an area-equivalent diameter of $d_i$.

*Pressure-induced flow (PIF) process*

In the present disclosure, a PIF process is performed in the process of preparing linear polypropylene foam, to deform the aforementioned specimen for preparing linear polypropylene foams under a deforming pressure and at a deforming temperature for a period of time. When the PIF process is performed in the process of preparing linear polypropylene foam, linear polypropylene foam with low density, and uniform and controlled cellular structure can be obtained.

In some embodiments, in the PIF step (b), the deforming pressure is greater than 400 psi. In some embodiments, the deforming pressure ranges from 400 psi to 3000 psi, such as from 450 psi to 2000 psi, from 470 psi to 1200 psi, or from 470 psi to 800 psi.

In some embodiments, in the PIF step (b), the deforming temperature ranges from 120 °C to 170 °C, such as from 120 °C to 160 °C, from 130 °C to 150 °C, from 145 °C to 155 °C, or from 135 °C to 145 °C. The deforming temperature may be differed based on the types of the linear polypropylene contained in the polymer composition of preparing the linear polypropylene foam. For example, the deforming temperature may range from 145 °C to 155 °C when the linear polypropylene contained in the polymer composition is essentially consisting of homopolymers and/or heterophasic copolymer of propylene. For further example, the deforming temperature may range from 135 °C to 145 °C when the linear polypropylene contained in the polymer composition is essentially consisting of random copolymer of propylene.

In some embodiments, in the PIF step (b), the deforming time is less than 15 minutes, such as less than 10 minutes, less than 5 minutes, less than 1 minute, less than 30 seconds, 10 seconds or less, or 5 seconds or less.

In some embodiments, the PIF step (b) further comprises subjecting the specimen to an ultrasound treatment (i.e., PIF process is an ultrasound vibration assisted PIF (UAPIF) process). In some embodiments, the ultrasound treatment has a vibration frequency of at least 20 kHz. In some embodiments, the UAPIF process may be conducted at a deforming pressure lower than that of the PIF. In some embodiments, the UAPIF process may be conducted at a deforming pressure ranging from 200 psi to 2000 psi, such as from 250 psi to 1550 psi, from 300 psi to 1000 psi, or from 350 psi to 800 psi. In some embodiments, the ultrasound treatment time is less than 120 seconds, such as less than 60 seconds, or 10 seconds or less.

*Foaming Process*

In the present disclosure, after the aforementioned PIF process, the deformed specimen is subjected into a foaming process to obtain the linear polypropylene foam. In some embodiment, the foaming process is a batch foaming process.

In some embodiments, the linear polypropylene foam may be prepared by a process, which may comprise the following steps: (i) molding the PIF-treated or UAPIF-treated specimen; (ii) placing the molded specimen in a pressurized chamber; (iii) saturating the molded specimen with at least one blowing agent such as non-hydrocarbon blowing agents (e.g., $CO_2$) for a period of time at a predetermined temperature and pressure; and (iv) reducing the pressure to ambient or sub-ambient pressure, to obtain the foam.

In some embodiments, steps (iii) to (iv) may further include pressurizing the molded specimen in the pressurized chamber with a blowing agent; allowing the polymer softened for a saturation period; and then discharging the pressure.

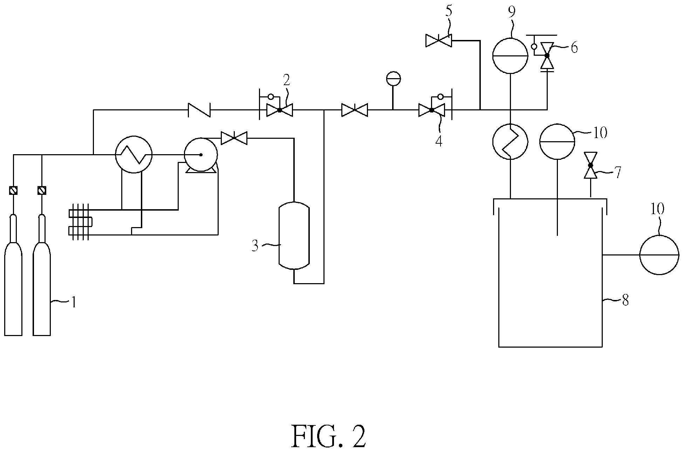

In one embodiment, the batch process for making the linear polypropylene foam may use a system as exemplified in FIG. 2. The system capable of using in the present disclosure at least comprises: a $CO_2$ cylinder 1; a back pressure valve 2; a buffer tank 3; a pressure adjustable valve 4; a compressed air valve 5; a safety valve 6; a pressure discharged valve 7; a reactor 8; a pressure detector 9; and temperature detectors 10.

In some embodiments, the linear polypropylene foam may be prepared by a process, which may comprise the following steps: (i) loading the PIF-treated or UAPIF-treated specimen into a high pressure autoclave reactor; (ii) injecting high pressure $CO_2$ into the high pressure autoclave reactor; (iii) increasing the temperature and the pressure to reach supercritical fluid (SCF) conditions of $CO_2$; (iv) closing the pressure valve after the set temperature is maintained stably for a time period such as 20-40 minutes, to saturate the PIF-treated or UAPIF-treated specimen with $CO_2$; (v) discharging the pressure; and (vi) opening the high pressure autoclave reactor and taking out of the foaming products.

In some embodiments, the high pressure autoclave reactor is pressurized from 500 psi to 3000 psi, such as, from 1000 psi to 3000 psi, from 1500 psi to 3000 psi, from 2000 psi to 3000 psi, from 500 psi to 2500 psi, from 500 psi to 2000 psi, from 500 psi to 1500 psi, from 1000 psi to 2500 psi, from 1000 psi to 2000 psi, from 1500 psi to 3000 psi, from 2000 psi to 2500 psi, or from 1750 psi to 2250 psi. In some embodiments, the temperature of the high pressure autoclave reactor increased from 120 °C to 170 °C, such as from 135 °C to 170 °C, from 150 °C to 170 °C, from 120 °C to 160 °C, from 120 °C to 150 °C, from 135 °C to 160 °C, from 130 °C to 160 °C, or from 140 °C to 160 °C. In some embodiments, the polymer composition and $CO_2$ are placed in the heated, pressurized reactor for a saturation period ranging from 2 minutes to 120 minutes, for example, from 10 minutes to 120 minutes, from 20 minutes to 120 minutes, from 40 minutes to 120 minutes, from 60 minutes to 120 minutes, from 2 minutes to 60 minutes, from 2 minutes to 40 minutes, from 2 minutes to 20 minutes, from 10 minutes to 60 minutes, from 15 minutes to 45 minutes, from 20 minutes to 90 minutes, or from 30 minutes to 75 minutes.

*Application*

The polymeric foam according to the present disclosure has high tensile strength, which is twice to three times of the conventional foam with the same cell density. Hence, the polymeric foam of the present disclosure can be applied to various fields.

The polymeric foam according to the present disclosure may be used, as non-limiting examples, in an insulation board, e.g. for construction and building, including, but not limited to, floor insulation, perimeter insulation, ceiling heat insulation, thermal insulation of flat roofs, exterior wall insulation, steep roof insulation, sandwich boards, pipe insulation, frost protection layers for buildings, interior fitting and transportation routes (e.g. it can be applied as insulation beneath highways, streets, bridges, or airport runways).

Also as non-limiting examples, the polymeric foam of the present disclosure may be used in a decorative article, including, but not limited to, component edge moldings, construction moldings, window frames, casings, picture frames, moldings, or foamed stocks.

Further as non-limiting examples, the polymeric foam according to the present disclosure may be used in a packaging material for food or electronics, for consumer goods or medical goods.

Also further as non-limiting examples, the polymeric foam according to the present invention may be used in automotive parts, including, but not limited to, door handles, door side parts, dashboards, interior trim parts, battery housings, air-filter housings, engine encapsulations, or air intake manifolds,.

Also as non-limiting examples, the polymeric foam according to the present invention may be used as sound insulation.

Also further as non-limiting examples, the polymeric foam according to the present invention may be used in sporting goods.

Additional objects and advantages of the present disclosure will be set forth in part in the description which follows, and in part will be obvious from the description, or may be learned by practice of the disclosure. The objects and advantages of the disclosure will be realized and attained by means of the elements and combinations particularly pointed out in the appended claims.

It is to be understood that both the foregoing general description and the following detailed description are exemplary and explanatory only and are not restrictive of the invention as claimed.

Other objects, advantages, and novel features of the invention will become more apparent from the following detailed description when taken in conjunction with the accompanying drawings.

The accompanying drawings, which are incorporated in and constitute a part of this specification, illustrate exemplary embodiments of the disclosure and together with the description, serve to explain the principles of certain embodiments.

BRIEF DESCRIPTION OF THE DRAWINGS

FIG. 1A is a perspective view showing a PIF apparatus used in examples of the present disclosure.

FIG. 1B is a perspective view showing PP samples before and after a PIF process.

FIG. 2 is a perspective view showing an exemplary system for making a linear polypropylene foam with a batch process.

FIG. 3A is a SEM photo of PP foam made from PIF-treated PC366-3 according to Example 2 of the present disclosure.

FIG. 3B is a SEM photo of WB140 PP cup according to Example 2 of the present disclosure.

FIG. 3C is a SEM photo of PP foam made from PIF-treated PC366-3 with 0.1 wt% β nucleating agent according to Example 2 of the present disclosure.

FIG. 4A is a SEM photo of PP foam made from non-PIF treated 8001 with 0.1 wt% $\alpha$ nucleating agent according to Example 2 of the present disclosure.

FIG. 4B shows SEM photos of PP foam made from PIF treated 8001 with 0.1 wt% $\alpha$ nucleating agent according to Example 2 of the present disclosure.

FIG. 5A shows SEM photos of PP foam made from non-PIF treated PC366-3 0.1 wt% $\beta$ nucleating agent according to Example 2 of the present disclosure.

FIG. 5B shows SEM photos of PP foam made from PIF treated PC366-3 0.1 wt% $\beta$ nucleating agent according to Example 2 of the present disclosure.

FIG. 6 shows SEM photos of PP foam made from PIF treated 90% PC366-3 added with 0.1 wt% $\beta$ nucleating agent (NAB-82) and 10% ST611K according to Example 3 of the present disclosure.

FIG. 7 shows SEM photos of PP foam made from PIF treated PC366-3 according to Example 3 of the present disclosure.

FIG. 8 shows SEM photos of PP foam made from PIF treated ST611 ($\beta$) according to Example 3 of the present disclosure.

FIG. 9 shows SEM photos of PP foam made from PIF treated ST611K-T1 according to Example 3 of the present disclosure.

FIG. 10 is a SEM photo of PP foam made from non-PIF treated PC366-3 according to Example 4 of the present disclosure.

FIG. 11 is a SEM photo of PP foam made from PIF treated PC366-3 according to Example 4 of the present disclosure.

FIG. 12 is a SEM photo of PP foam made from PC366-3 added with 0.1% $\beta$ nucleating agent (NAB-82) according to Example 4 of the present disclosure.

FIG. 13 is a SEM photo of PP foam made from PIF treated 90% PC366-3 added with 0.1 wt% $\beta$ nucleating agent (NAB-82) and 10% ST611K according to Example 4 of the present disclosure.

FIG. 14 is a SEM photo of PP foam made from PIF treated PPCFoam-T14 according to Example 4 of the present disclosure.

FIG. 15 is a SEM photo of PP foam made from PIF treated ST611 ($\beta$) according to Example 4 of the present disclosure.

FIG. 16 is a SEM photo of PP foam made from PIF treated PT181PIF-T1 according to Example 4 of the present disclosure.

FIG. 17 is a SEM photo of PP foam made from PIF treated ST925 according to Example 4 of the present disclosure.

FIG. 18 is a DSC diagram of PP foam made from PC366-3 ($\beta$).

FIG. 19 is a DSC diagram of PP foam made from PP composition with $\alpha$ nucleating agent content larger than $\beta$ nucleating agent.

FIG. 20 is a DSC diagram of PP foam made from PP composition with $\alpha$ nucleating agent content less than $\beta$ nucleating agent.

DETAILED DESCRIPTION OF THE PREFERRED EMBODIMENT

The present disclosure has been described in an illustrative manner, and it is to be understood that the terminology used is intended to be in the nature of description rather than of limitation. Many modifications and variations of the present disclosure are possible in light of the above teachings. Therefore, it is to be understood that within the scope of the appended claims, the invention may be practiced otherwise than as specifically described.

***Analytical Methods***

*Foam density*

The mass densities of foamed polypropylene (PP foams) samples $\rho_f$ were measured according to ASTM D792, wherein polymer foam is weighted in water using a sinker. $\rho_f$ was calculated as follows:

$$\rho_f = \frac{a}{a-b}\rho_{water}$$

wherein a is the apparent mass of sample in air, b is the apparent mass of the sample completely immersed in water, and $\rho_{water}$ is the density of water.

*Scanning Electron Microscopy (SEM)*

The morphologies of the obtained PP foams were detected by SEM (JEOL JSM-5600). The samples were immersed into liquid nitrogen for 30 min and then fractured. The fractured surfaces were sprayed with a layer of gold for further observation by SEM.

*Differential Scanning Calorimetry (DSC)*

A TA Q100 DSC was used to characterize the melting behavior of the obtained PP foams. Samples weighing approximately 6-10 mg were used for DSC characterization. The scanning range was ranged from 20° C to 200° C at a rate of 10° C/min.

*Materials used in the following examples*

WB140: HMS-PP from Borealis.
Globalene® PC366-3 ("PC366-3," MFR of 3 g/10 min): homopolymer of propylene from LCY Chemical Corp.
Globalene® ST611 ("ST611," MFR of 1.8 g/10 min): a random copolymer of propylene from LCY Chemical Corp.
Globalene® ST611K ("ST611K"): ST611 with alpha nucleating agent NX8000K.
ST611K-T1: ST611K with elastomer POE (Polyolefin elastomer from Dow Chemical).
ST611K-T2: ST611K with elastomer POE (Polyolefin elastomer from ExxonMobile).
Globalene® PT181 ("PT181," MFR of 0.4 g/10 min): homopolymer of propylene from LCY Chemical Corp.
PT181PIF-T1: PT181 modified with 8001 and specific $\alpha/\beta$ composition (MFR 0.53)
Globalene® ST925 ("ST925," MFR of 14 g/10 min): Random compolymer of propylene from LCY Chemical Corp.
Globalene® 8001 ("8001," MFR of 0.3 g/10 min): Random compolymer of propylene from LCY Chemical Corp.
NX8000K: Bis(4-propylbenzylidene) propyl sorbitol, which is a type of alpha nucleating agent from Milliken & Company.
NAB-82: calcium tetrahydrophthalate, which is a type of beta nucleating agent from Gchchem.
NA-11: sodium 2,2'-methylene-bis-(4,6-di-t-butylphenylene) phosphate, which is a type of alpha nucleating agent
MB50-321: Lubricating agent from Dow Corning
MB50-001: Lubricating agent from Dow Corning
Irganox 1010: Antioxidant from BASF
Irgafos 168: Antioxidant from BASF
Hyperform® HPN-20E: "HPN-20E ", Calcium salt of 1,2-cyclohexanedicarboxylic acid from Milliken & Company.

$CO_2$ with a purity of 99.99% was used as a blowing agent.

### Example 1 - Evaluating parameters in PIF process

Before the PIF process, polypropylene with or without nucleating agents were first mixed in a high speed Henschel mixer for 30-60 seconds. The mixtures (10 kg each) were then put into the hopper of a co-rotating twin screw extruder (L/D: 37, KM Berstorff ZE40A) with a temperature setting of 160-200°C and a screw rotational speed of 260-300 rpm. The extruded polymer composition was then molded through a die and then cooled in a tank with water circulation to obtain polymer strands. After water was removed, the strands were cut by a pelletizer, and the pellets were further screened with a classifier to get the final pellets (i.e. the polymer composition of the present disclosure).

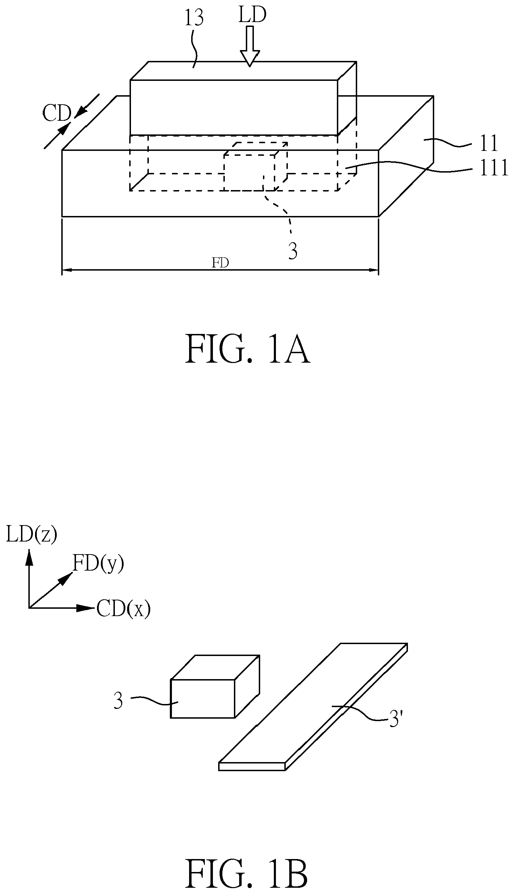

Polymer compositions after molding are to be treated with PIF process were placed in the cavity of the apparatus shown in FIG. 1A.

FIG. 1A is a perspective view showing a PIF apparatus used in the present disclosure. The PIF apparatus used in the present disclosure mainly comprises: a mold 11 with a cavity 111; and a plunger 13 having a size approximately identical to the size of the cavity 111. During the PIF process, the sample 3 was placed in the cavity 111, followed by heated and pressed by the plunger 13; and then, the sample 3 was deformed, flowed in the flow direction (FD), constrained in the constraint direction (CD) and compressed in the load direction (LD). FIG. 1B is a perspective view showing samples before and after the PIF process. The sample 3 before the PIF process has a cube shape; but the present disclosure is not limited thereto. After the PIF process, the sample 3 is pressed and become a sheet 3'. In the present example and the following examples, the cavity 111 has a size of $13 \times 5 \times 3\ mm^3$ or $165 \times 13 \times 3\ mm^3$; but the present disclosure is not limited thereto.

The PIF process held in the present example and the following examples are briefly described below.

First, the plastic pellets or powders are injection molding or compression molding into a typical specimen (for example, the sample 3 shown in FIG. 1B). Next, the specimen is then put into a compression mold (for example, the PIF apparatus shown in FIG. 1A). After introducing suitable pressure and temperature under a setting time, the specimens is fully compressed and elongated to fit the cavity. The compressed specimen (for example, the sheet 3' shown in FIG. 1B) is then used for physical properties analysis and afterwards foaming process.

In the present example, the specimen is pre-heated in an oven at 130~145°C for 5~15 min, compressed and elongated at 130~155°C and 470~3000 psi for 10 sec, and then cooled. The cooling conditions can be held by minimizing compression pressure (hereinafter, "min. compression pressure") or natural cooling to room temperature.

In the present example, PC366-3 with 0.1 wt% β nucleating agent (NAB-82) was used as the polymer composition to identify the processing window of the PIF process. The results are shown in the following Table 1.

Table 1

| Item | Pre-heating | | PIF process | | Cooling process | Density (g/cm$^3$) |
|------|-------------|-----------|-------------|-----------------|-----------------|-------------------|
|      | Temp (°C) | Time (min) | Temp (°C) | Pressure (psi) |                 |                   |
| 1-1  | 130 | 10 | 155 | 3000 | Natural cooling | 0.633 |
| 1-2  | 135 | 10 | 155 | 3000 | Natural cooling | 0.621 |
| 1-3  | 140 | 10 | 155 | 3000 | Natural cooling | 0.624 |
| 1-4  | 145 | 10 | 155 | 3000 | Min. compression pressure | 0.487 |
| 1-5  | 145 | 10 | 155 | 3000 | Natural cooling | 0.448 |
| 1-6  | 145 | 10 | 155 | 470 | Natural cooling | 0.188 |
| 1-7  | 145 | 5 | 155 | 470 | Natural cooling | 0.174 |
| 1-8  | 135 | 10 | 155 | 470 | Natural cooling | 0.218 |
| 1-9  | 140 | 10 | 155 | 1000 | Natural cooling | 0.710 |
| 1-10 | 145 | 10 | 155 | 1000 | Natural cooling | 0.682 |
| 1-11 | 150 | 10 | 155 | 1000 | Natural cooling | 0.372 |
| 1-12 | 155 | 10 | 155 | 1000 | Natural cooling | 0.385 |
| 1-13 | 130 | 10 | 155 | 600 | Natural cooling | 0.292 |
| 1-14 | 135 | 10 | 155 | 600 | Natural cooling | 0.426 |
| 1-15 | 140 | 10 | 155 | 600 | Natural cooling | 0.402 |
| 1-16 | 145 | 10 | 155 | 600 | Natural cooling | 0.343 |
| 1-17 | 150 | 10 | 155 | 600 | Natural cooling | 0.168 |
| 1-18 | 155 | 10 | 155 | 600 | Natural cooling | 0.230 |
| 1-19 | 130 | 10 | 155 | 800 | Natural cooling | 0.628 |
| 1-20 | 135 | 10 | 155 | 800 | Natural cooling | 0.666 |
| 1-21 | 140 | 10 | 155 | 800 | Natural cooling | 0.601 |
| 1-22 | 145 | 10 | 155 | 800 | Natural cooling | 0.249 |
| 1-23 | 150 | 10 | 155 | 800 | Natural cooling | 0.388 |
| 1-24 | 155 | 10 | 155 | 800 | Natural cooling | 0.189 |

As shown in Items 1-4 and 1-5, the densities of the samples cooled by minimizing compression pressure or natural cooling to room temperature are similar. Hence, according to the results shown in Table 1, the optimal PIF processing window can be identified as follow. Temperature:

Homopolymer and heterophasic (impact) copolymer PP: 145 ~155°C
Random copolymer PP: 135 ~ 145 °C
Gauge pressure: 470 ~ 800 psi

Compression time: 10 ~ 30 sec
Cooling mode: Natural cooling

***Example 2 - Comparing samples treated with and without PIF process***

The PIF-treated and non-PIF treated specimens were batch foamed using a high-pressure autoclave. After placing the specimens in a high pressure vessel, $CO_2$ was injected into the vessel. After the samples were saturated with $CO_2$ at set temperature and 2050 psi for 30 min, an instant depressurization (< 3 sec) was applied to achieve PP foaming. All samples were foamed with supercritical $CO_2$. Herein, the foaming temperature for 8001 is 135-145 °C, and the foaming temperature for PC366-3 is 145-155 °C.

Herein, a WB140 PP cup, in which WB140 is commercialized HMSPP from Borealis AG, is used as a comparison example. The density of the WB140 PP cup is 0.29 $g/cm^3$; and the cell size of the cells thereof is not uniform.

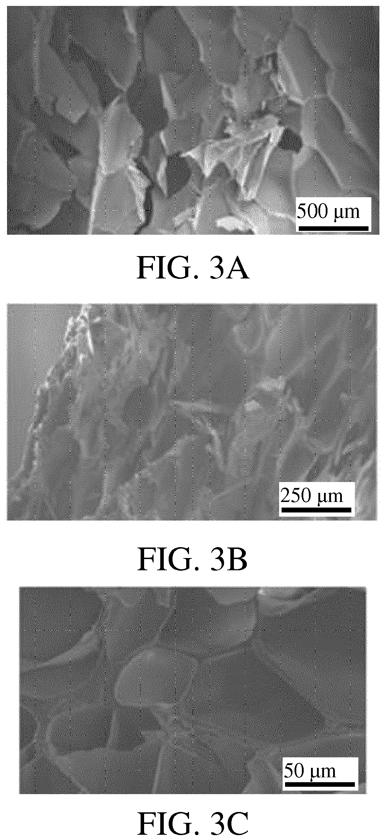

In the present example, as shown in FIGs. 3A and 3B, the PP foam made from PIF-treated PC366-3 has a density of 0.062 $g/cm^3$; and the cell size of the cells thereof is more uniform than the cell size of the cells of WB140. In addition, the PP foam made from PIF-treated PC366-3 with 0.1 wt% β nucleating agent (NAB-82) has a density of 0.077 $g/cm^3$, as shown in FIG. 3C; and the cell size of the cells thereof is more uniform than the cell size of the PP foam made from PIF-treated PC366-3 without nucleating agent.

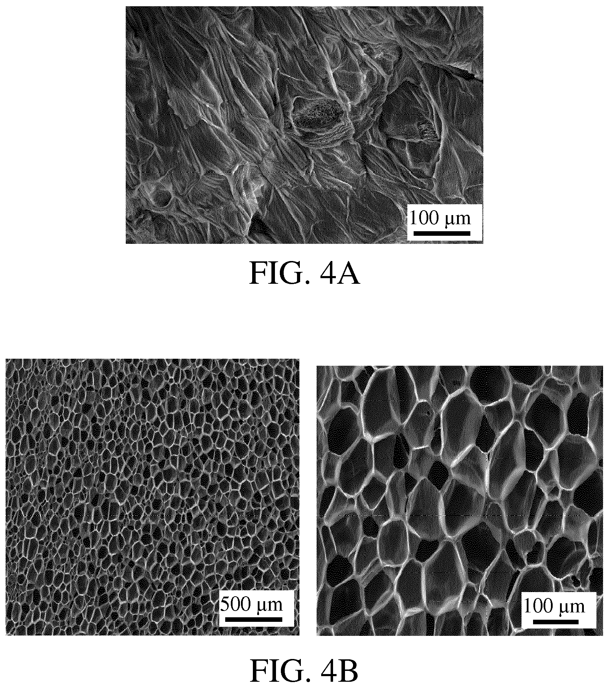

Furthermore, the PP foam made from PIF-treated and non-PIF treated 8001 with 0.1 wt% α nucleating agent (HPN-20E) were compared. After SEM analysis, the PP foam made from non-PIF treated 8001 with 0.1 wt% α nucleating agent has fragile structure (as shown in FIG. 4A), and the structure is distorted after vacuum drawing during gold-plating on the sample. On the other hand, the PP foam made from PIF treated 8001 with 0.1 wt% α nucleating agent has stiff structure, and has uniform cells after vacuum drawing during gold-plating on the sample (as shown in FIG. 4B).

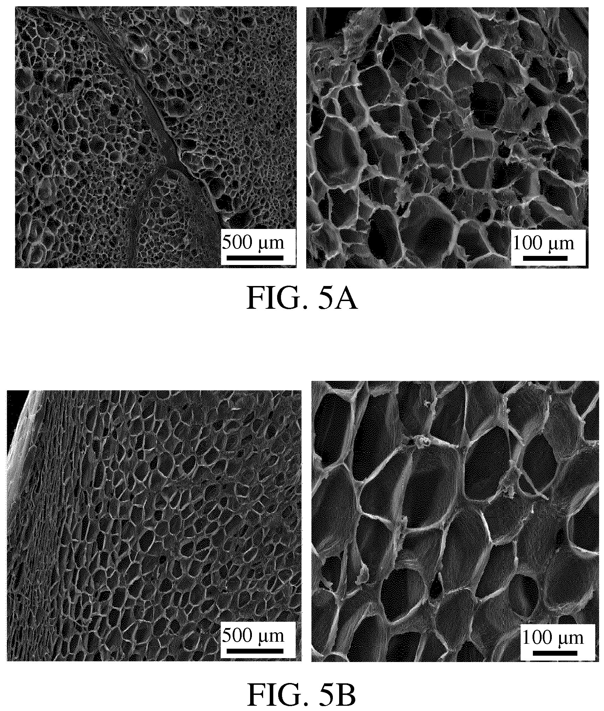

Additionally, the PP foam made from PIF-treated and non-PIF treated PC366-3 with 0.1 wt% β nucleating agent (NAB-82) were also compared. After SEM analysis, as shown in FIGs. 5A and 5B, the PP foam made from PIF treated PC366-3 0.1 wt% β nucleating agent (NAB-82) has more uniform and stiff cell structure than the PP foam made from non-PIF treated PC366-3 0.1 wt% β nucleating agent (NAB-82).

***Example 3 - Small-scale foaming***

In the present example, specimens were pre-heated at 140 °C for 10 min, treated with the PIF process at the conditions listed in the following Table 2, and then cooled through natural cooling.

The types of the polymer compositions, the PIF conditions used in the present example, and the physical properties of the PIF treated specimens are listed in the following Table 2.

Table 2

| Sample items | Polymer composition | PIF process | | | Tensile strength ($kg/cm^2$) | Izod impact strength (23 °C) (kg-cm/cm) |
|---|---|---|---|---|---|---|
| | | Temp (°C) | Pressure (psi) | Time (sec) | | |
| Spacer - 1 mm*a | | | | | | |
| 2-1 | ST611 (β)*b | 135 | 470 | 10 | 83.6 | 11.5 |
| 2-2 | ST611K-T1 | 135 | 470 | 10 | 84.5 | 54.8 |
| 2-3 | ST611K-T2 | 135 | 470 | 10 | 178 | 50.0 |
| 2-4 | 90% PC366-3 (β)*c 10% ST611K | 150 | 470 | 10 | 343.3 | 97.8 |
| 2-5 | PC366-3 | 150 | 470 | 10 | 294.7 | 38.8 |
| Spacer - 2 mm*a | | | | | | |
| 2-6 | ST611 (β)*b | 135 | 470 | 10 | 90.2 | 11.9 |
| 2-7 | ST611K-T1 | 135 | 470 | 10 | 134.3 | 48.2 |
| 2-8 | ST611K-T2 | 135 | 470 | 10 | 169.9 | 42.4 |
| 2-9 | 90% PC366-3 (β)*c 10% ST611K | 150 | 470 | 10 | 343.4 | 91.2 |

(continued)

| Spacer - 2 mm*a | | | | | | |
|---|---|---|---|---|---|---|
| 2-10 | PC366-3 | 150 | 470 | 10 | 292.9 | 31.6 |
| 2-11 | 8001 | 135 | 470 | 10 | -- | -- |
| *a: A spacer having thickness of 1 mm or 2 mm was put in the cavity 111 of the PIF apparatus shown in FIG. 1A.<br>*b: "ST611 (β)" refers to a polymer composition comprising ST611 with 0.1 wt% β nucleating agent (NAB-82).<br>*c: "PC366-3 (β)" refers to a polymer composition comprising PC366-3 with 0.1 wt% β nucleating agent (NAB-82). | | | | | | |

Compared to the non-PIF treated PC366-3, which has the Izod impact strength of around 3 kg-cm/cm, all the PIF treated polymer compositions listed in the above Table 2 have better Izod impact strengths. This result indicates the PIF process can enhance the impact strength of the polymer compositions.

The PIF-treated samples listed in the above Table 2 were then treated with the batch foaming process with different conditions. The process of the batch foaming process used in the present example is similar to that shown in Example 2, except the conditions of the batch foaming process. The conditions of the foaming process and the densities of the obtained PP foam are listed in the following Table 3, wherein the identical sample items listed in Tables 2 and 3 refer to the same polymer compositions.

Table 3

| Sample items | Batch foaming process | | | Density (g/cm$^3$) |
|---|---|---|---|---|
| | Temp (°C) | Pressure (psi) | Time (min) | |
| 2-4 | 155 | 2050 | 30 | 0.025 |
| 2-9 | | | | 0.021 |
| 2-5 | | | | 0.036 |
| 2-10 | | | | 0.033 |
| 2-4 | 155 | 2050 | 10 | 0.038 |
| 2-9 | | | | 0.051 |
| 2-5 | | | | 0.061 |
| 2-10 | | | | 0.067 |
| 2-1 | 145 | 2050 | 30 | Melted |
| 2-2 | | | | 0.039 |
| 2-3 | | | | 0.058 |
| 2-6 | | | | Melted |
| 2-1 | 140 | 2050 | 30 | 0.036 |
| 2-2 | | | | 0.044 |
| 2-3 | | | | 0.045 |
| 2-6 | | | | 0.036 |
| 2-1 | 140 | 2050 | 10 | 0.063 |
| 2-2 | | | | 0.075 |
| 2-3 | | | | 0.080 |
| 2-6 | | | | 0.068 |
| 2-7 | 140 | 2050 | 30 | 0.045 |
| 2-8 | | | | 0.047 |
| 2-11 | | | | 0.037 |

As shown in Table 3, when the PIF-treated specimens are foamed, PP foams with low densities can be obtained. By controlling the temperature of the foaming conditions, the melting of the specimens can be prevented.

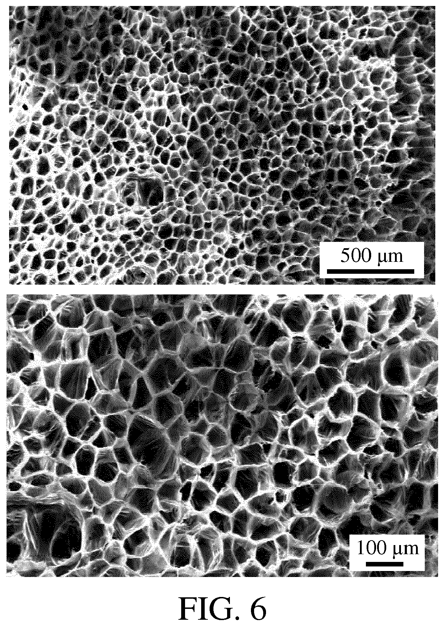

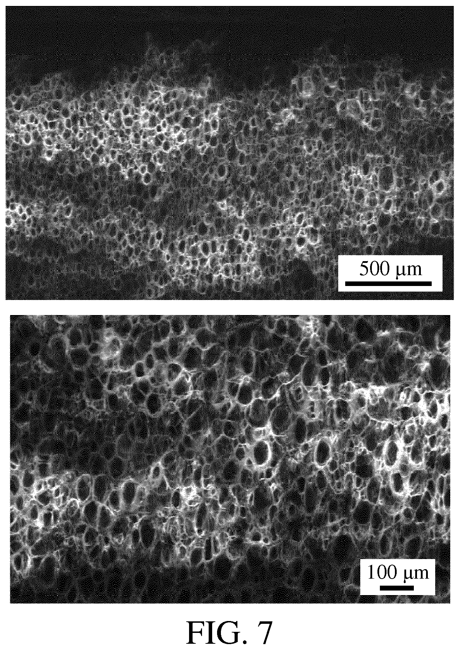

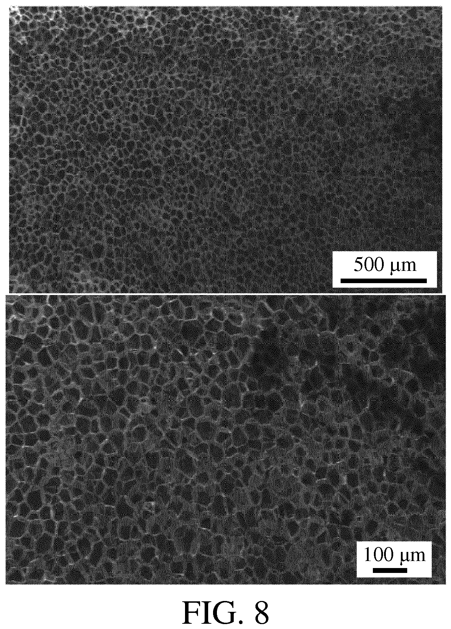

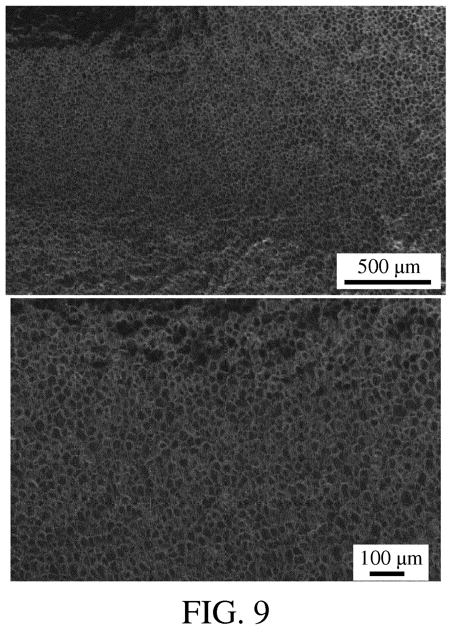

FIGs. 6 to 9 show different PP foams made from specimens with different formulations. When the specimen is treated with PIF process first, even though the PP contained in the polymer composition has low MFR (for example, PP 8001 (Item 2-11) having MFR of 0.3 g/10 min), PP foams with low density still can be obtained. Furthermore, the PP foam made from the polymer composition of 90% PC366-3 added with 0.1 wt% β nucleating agent (NAB-82) and 10% ST611K (contain NX8000K) has the most uniform cells and the best impact strength.

### Example 4 - Large-scale foaming

In the present example, small and large specimens of the PP polymer compositions were tested, wherein the size of the small specimens is 13 mm x 5mm x 2mm, and the size of the large specimens is the specimen of tensile strength (165mm x 13mm x 2mm). The types of the polymer compositions, the PIF and foaming conditions used in the present example, and the density of the obtained foams are listed in the following Table 4.

Table 4

| Items | Polymer composition | Size*d | PIF process | | | Batch foaming process | | | Density (g/cm³) |
|---|---|---|---|---|---|---|---|---|---|
| | | | Temp (°C) | Pressure (psi) | Time (sec) | Temp (°C) | Pressure (psi) | Time (sec) | |
| 4-1 | PC366-3 | Small | -- | -- | -- | 160 | 2050 | 30 | 0.032 |
| 4-2 | | Small | 150 | 470 | 10 | 160 | 2050 | 30 | 0.042 |
| 4-3 | | Large | -- | -- | -- | 160 | 2050 | 30 | 0.245 |
| 4-4 | | Large | 150 | 470 | 10 | 160 | 2050 | 30 | 0.061 |
| 4-5 | PC366-3 (β)*e | Small | -- | -- | -- | 160 | 2050 | 30 | 0.022 |
| 4-6 | | Small | 150 | 470 | 10 | 160 | 2050 | 30 | 0.041 |
| 4-7 | | Large | 150 | 470 | 10 | 160 | 2050 | 30 | 0.035 |
| 4-8 | 90% PC366-3 (P) 10% ST611K | Small | -- | -- | -- | 160 | 2050 | 30 | 0.024 |
| 4-9 | | Small | -- | -- | -- | -- | -- | -- | -- |
| 4-10 | | Large | -- | -- | -- | 160 | 2050 | 30 | 0.041 |
| 4-11 | ST611 (β)*f | Small | -- | -- | -- | 140 | 2050 | 30 | 0.044 |
| 4-12 | | Small | -- | -- | -- | -- | -- | -- | -- |
| 4-13 | | Large | 135 | 470 | 10 | 140 | 2050 | 30 | 0.032 |
| 4-14 | PPCFoam-T14* g | Small | -- | -- | -- | 160 | 2050 | 30 | 0.032 |
| 4-15 | | Small | -- | -- | -- | -- | -- | -- | -- |
| 4-16 | | Large | -- | -- | -- | 160 | 2050 | 30 | 0.041 |
| 4-17 | PT181PIF-T1 | Small | -- | -- | -- | 160 | 2050 | 30 | 0.083 |
| 4-18 | | Small | 150 | 470 | 10 | 160 | 2050 | 30 | 0.023 |
| 4-19 | | Large | 150 | 470 | 10 | 160 | 2050 | 30 | 0.039 |
| 4-20 | ST925 | Small | -- | -- | -- | 145 | 2050 | 30 | 0.032 |
| 4-21 | | Small | 135 | 470 | 10 | 145 | 2050 | 30 | 0.036 |
| 4-22 | | Large | 135 | 470 | 10 | 145 | 2050 | 30 | 0.04 |

*d: The term "size" herein refers to small or large specimens.
*e: "PC366-3 (β)" refers to a polymer composition comprising PC366-3 with 0.1 wt% β nucleating agent (NAB-82).
*f: "ST611 (β)" refers to a polymer composition comprising ST611 with 0.1 wt% β nucleating agent (NAB-82).
*g: "PPCFoam-T14" refers to a polymer composition comprising 90 wt% PC366-3, 10 wt% ST611, 0.05 wt% α nucleating agent (NX8000K) and 0.2 wt% β nucleating agent (NAB-82).

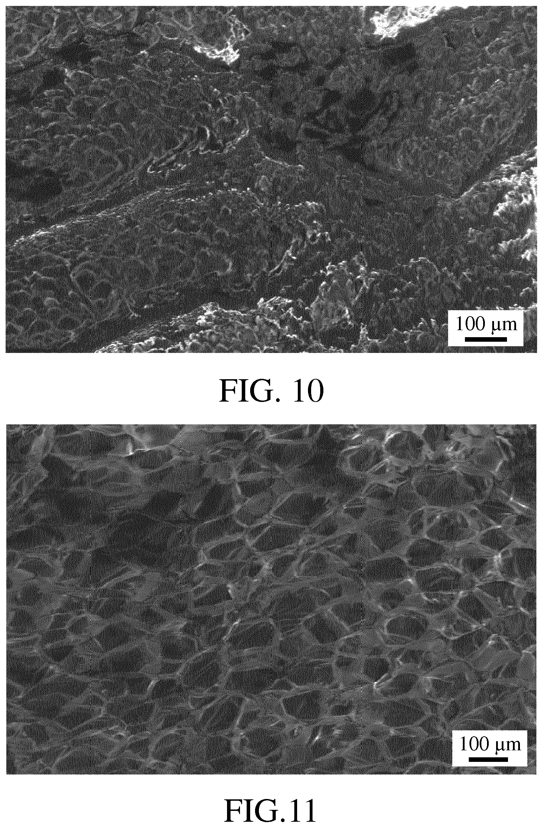

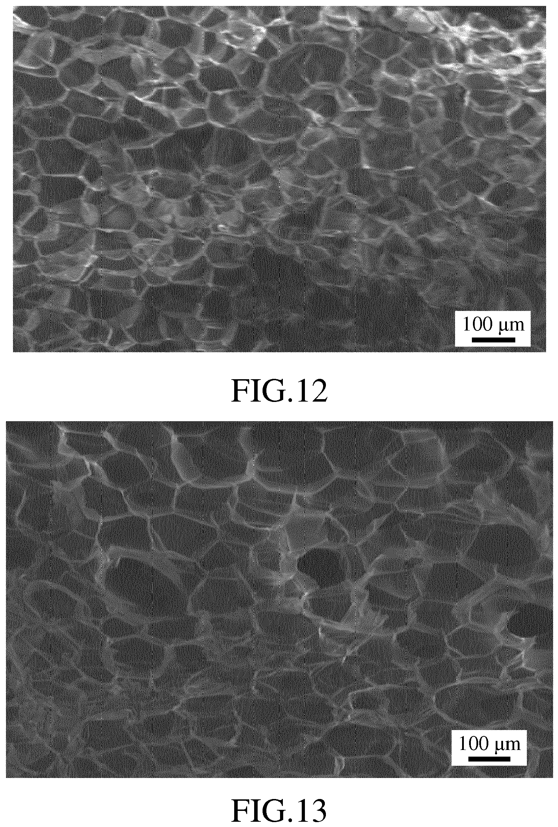

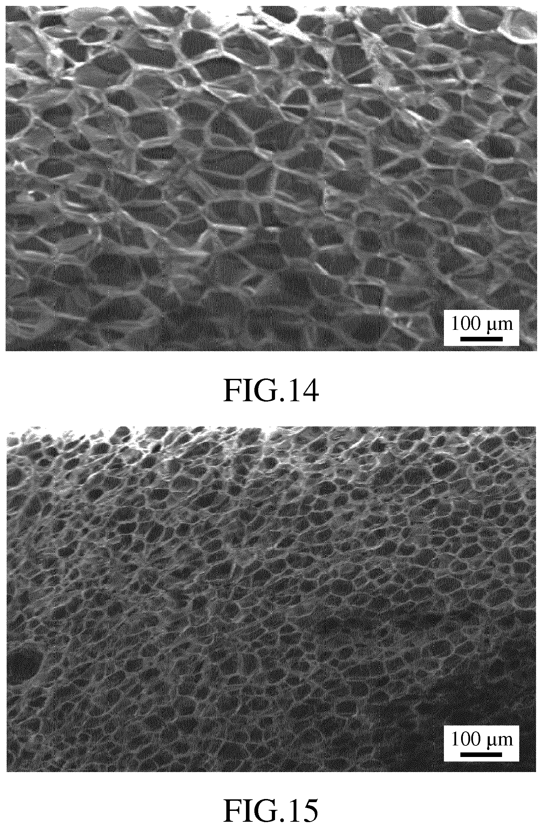

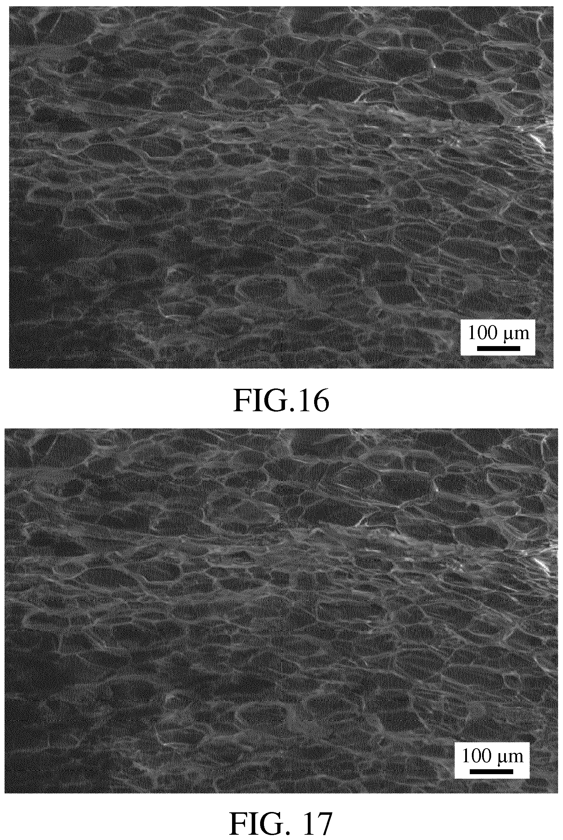

FIGs. 10 to 17 show different PP foams made from specimens with different formulations.

As shown in Table 4, when the specimens were treated with PIF process first, the obtained PP foams can have low density. For example, comparing the large specimens of PC366-3 treated with or without PIF process (as shown in FIGs. 10 and 11), the density of the PIF treated PP foam is much lower than that of the non-PIF treated PP foam. Hence, the PIF process indeed can facilitate to form PP foam with uniform cells and low density.

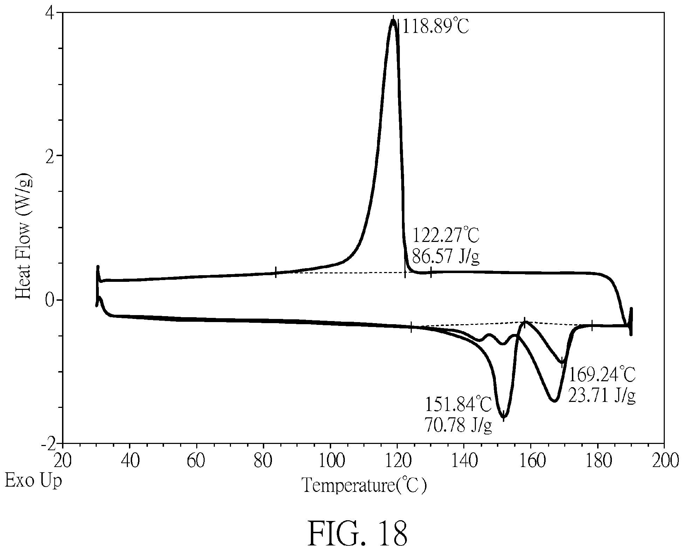

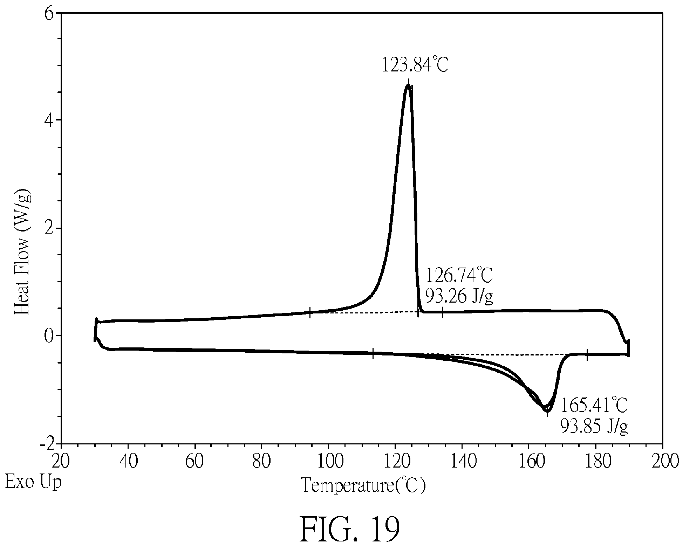

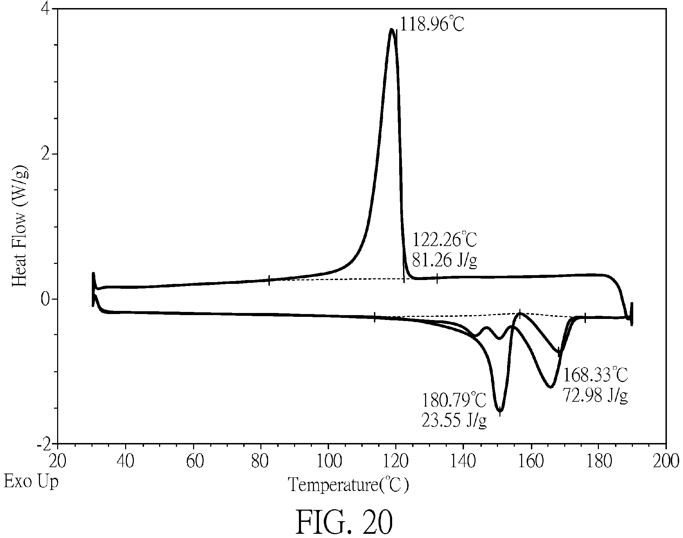

In addition, the DSC diagrams of three composite formulations which contain only β or with α nucleating agents are shown in FIGs. 18 to 20. There are two melting peaks shown in the diagram of FIG. 18 when only adds β nucleating agent in the formulation. Interestingly, when the amount of β nucleating agent is higher or equal to the amount of α nucleating agent, as shown in FIG. 20, there are still two melting peaks (α and β crystals) clearly shown in the DSC diagram. On the other hand, when the amount of β nucleating agent is less than the amount of α nucleating agent, as shown in FIG. 19, only one melting peak (for α crystal) shows up in the DSC diagram. Nevertheless, all the cell density and expansion ratio of the three composite formulations are very comparable. The difference will be discerned in the physical properties before and after foaming.

From the results shown in the aforementioned examples, the PP foam made from the polymer composition containing 90 wt% PC366-3 (added with 1 wt% β nucleating agent) and 10 wt% ST611K (contains NX8000K) has homogeneous and small cell size distribution and also has lower density. The non-foamed specimens treated with the PIF process have relatively higher tensile strength and impact strength than the non-foamed specimen without PIF treatment.

In addition, the cell sizes of the PP foams made from the PIF-treated polymer compositions ST611 added with β nucleating agent (20~30 μm) and ST611K-T1 (10~20 μm) are smaller than the cell sizes of the PP foams made from other formulations. Hence, these PP foams can be used in certain applications that need to absorb energy in high cushion.

Furthermore, the stiffness of the PP foam made from the PIF treated polymer composition is quite better than that of the PP foam made from the non-PIF treated polymer composition.

***Example 5 - Batch foaming process***

In the present example, specimens of the PP polymer compositions were tested, wherein the size of the small specimens is 60 mm x 60 mm x 2.3mm. The components of the polymer compositions are listed in the following Table 5.

Table 5

| PP polymer composition | Components in the PP polymer composition |
|---|---|
| PPCFoam-T11 | WB140 + 2 wt% talc + 0.1 wt% Irganox 1010 + 0.1 wt% Irgafos 168 |
| PC366-3 (α+β) | PC366-3 + 0.1 wt% NAB-82 + 0.05 wt% NA11+ 0.1 wt% Irganox 1010 + 0.1 wt% Irgafos 168 |
| ST611 (α+β) | ST611 + 0.1 wt% NAB-82 + 0.05 wt% NA11 + 0.1 wt% Irganox 1010 + 0.1 wt% Irgafos 168 |
| PPCFoam-T17 | PC366-3 + 10 wt% ST611 + 0.1 wt% NAB-82 + 0.05 wt% NX8000K + 1 wt%MB50-321 + 0.1 wt% Irganox 1010 + 0.1 wt% Irgafos 168 |
| PPCFoam-T24 | ST925 + 5 wt% ST611 + 0.1 wt% NAB-82 + 0.05 wt% NX8000K + 0.5 wt% MB50-001+ 0.1 wt% Irganox 1010 + 0.1 wt% Irgafos 168 |
| PPCFoam-T27 | PC366-3 + 10 wt% ST611 + 0.1 wt% NAB-82 + |
| | 0.05 wt% NX8000K + 0.5 wt% MB50-001+ 0.1 wt% Irganox 1010 + 0.1 wt% Irgafos 168 |
| PPCFoam-T33 | ST925 + 5 wt% ST611 + 0.1 wt% NAB-82 + 0.05 wt% NX8000K + 0.5 wt% MB50-001+ 0.1 wt% Irganox 1010 + 0.1 wt% Irgafos 168 + 2% talc HTP-05 |

The foaming conditions used in the present example, and the density, the tensile strength and the elongation at break of the obtained foams are listed in the following Table 6. Herein, the blowing agent used in the foaming process is supercritical $CO_2$. Furthermore, the density of the obtained foams were measured by ASTM D1622, the tensile strength thereof were measured by IS0 1798:2008, and the elongation at break thereof were measured by IS0 1798:2008. In addition, all the specimens were placed at 23°C and 65% RH for at least 24 hours before testing.

Table 6

| Items | PP polymer composition | Foaming conditions | Density (g/cm$^3$) | Tensile strength (kPa) | Elongation at break (%) |
|---|---|---|---|---|---|
| 6-1 | PPCFoam-T11 | 155°C/2050 psi/30min | 0.375 | -- | -- |
| 6-2 | PC366-3 ($\alpha+\beta$) | 160°C/2050 psi/30min | 0.025 | 644 | 16.97 |
| 6-3 | PC366-3 ($\alpha+\beta$) | 155°C/2050 psi/30min | 0.043 | 970 | 10.80 |
| 6-4 | ST611 ($\alpha+\beta$) | 130°C/2050 psi/30min | 0.053 | 1580 | 28.30 |
| 6-5 | ST611 ($\alpha+\beta$) | 135°C/2050 psi/30min | 0.059 | 2763 | 26.90 |
| 6-6 | PPCFoam-T17 | 155°C/2050 psi/30min | 0.032 | 742 | 14.75 |
| 6-7 | PPCFoam-T24 | 145°C/2050 psi/30min | 0.037 | 475 | 20.35 |
| 6-8 | PPCFoam-T24 | 145°C/2050 psi/15min | 0.027 | 795 | 13.18 |
| 6-9 | PPCFoam-T27 | 155°C/2050 psi/30min | 0.037 | 1325 | 17.60 |
| 6-10 | PPCFoam-T33 | 130°C/2050 psi/30min | 0.061 | 2127 | 34.50 |
| 6-11 | EPP beads Foam (BASF) | -- | 0.02 | 300 | 22 |
| 6-12 | EPP beads Foam (BASF) | -- | 0.03 | 430 | 21 |
| 6-13 | EPP beads Foam (BASF) | -- | 0.04 | 550 | 19 |
| 6-14 | EPP beads Foam (BASF) | -- | 0.05 | 650 | 18 |
| 6-15 | EPP beads Foam (BASF) | -- | 0.06 | 760 | 17 |

The physical properties of PP foams made from the polymer compositions listed in Table 5 via the batch physical foaming process (i.e. Items 6-2 to 6-10) are compared to that made by WB140 (i.e. Item 6-1) and EPP beads foam (BASF NEOPOLEN) (i.e. Items 6-11 to 6-15). Basically, the tensile strength of all PP foams made from the polymer compositions of the present disclosure (i.e. Items 6-2 to 6-10) is higher than the commercial EPP beads foam (i.e. Items 6-11 to 6-15) at the similar density range. However, the elongation at break of some PP foams made from the polymer compositions of the present disclosure at certain foaming temperature is not as good as the commercial EPP beads foam; but this can be overcome by adjusting the foaming temperature and residence time to get balance of the properties between tensile strength and elongation at break.

Furthermore, the specimens of the PP polymer compositions were treated with PIF process, followed by the foaming process. The PIF and foaming conditions used in the present example, and the density, the tensile strength and the elongation at break of the obtained foams are listed in the following Table 7. Herein, the blowing agent used in the foaming process is supercritical $CO_2$. Furthermore, the density of the obtained foams were measured by ASTM D1622, the tensile strength thereof were measured by ISO 1798:2008, and the elongation at break thereof were measured by ISO 1798:2008. In addition, all the specimens were placed at 23°C and 65% RH for at least 24 hours before testing.

Table 7

| Items | PP polymer composition | PIF conditions | Foaming conditions | Density (g/cm$^3$) | Tensile strength (kPa) | Elongation at break (%) |
|---|---|---|---|---|---|---|
| 7-1 | PPCFoam-T11 | -- | 155°C/2050 psi/ 30min | 0.236 | -- | -- |
| 7-2 | PPCFoam-T17 | 150°C/470 psi/ 10sec | 155°C/2050 psi/ 30min | 0.038 | 1108 | 26.45 |
| 7-3 | PPCFoam-T24 | 150°C/470 psi/ 10sec | 145°C/2050 psi/ 30min | 0.036 | 1029 | 36.92 |
| 7-4 | PPCFoam-T27 | 150°C/470 psi/ 10sec | 155°C/2050 psi/ 30min | 0.045 | 1590 | 40.05 |
| 7-5 | PPCFoam-T33 | 140°C/470 psi/ 10sec | 130°C/2050 psi/ 30min | 0.052 | 2748 | 34.45 |
| 7-6 | EPP beads Foam (BASF) | -- | -- | 0.03 | 430 | 21 |
| 7-7 | EPP beads Foam (BASF) | -- | -- | 0.04 | 550 | 19 |
| 7-8 | EPP beads Foam (BASF) | -- | -- | 0.05 | 650 | 18 |

The physical properties of PP foams made from the PIF treated polymer compositions listed in Table 5 (i.e. Items 7-2 to 7-5) are compared to those made by WB140 (i.e. Item 7-1) and EPP beads foam (BASF NEOPOLEN) (i.e. Items 7-6 to 7-8), and the comparison results are shown in Table 7. The results shown in Table 7 indicate that the PP foams made from the PIF-treated polymer compositions of the present disclosure (i.e. Items 7-2 to 7-5) have improved tensile strength and elongation at break compared to those made from WB140 (i.e. Item 7-1) and EPP beads foam (BASF NEOPOLEN) (i.e. Items 7-6 to 7-8). In addition, by comparing the results shown in Tables 6 and 7, when the PP foams made from the polymer compositions of the present disclosure are treated with the PIF process first followed by the batch physical foaming process (i.e. Items 7-2 to 7-5), the tensile strength and elongation at break of the PP foams made from the PIF-treated polymer compositions (i.e. Items 7-2 to 7-5) are better than the PP foams made from the non PIF-treated polymer compositions (i.e. Items 6-6 to 6-10).

From the results shown in the present example, it can be concluded that when the PP polymer compositions of the present disclosure are treated with the PIF process first, the obtained PP foams after the foaming process have improved both tensile strength and elongation at break. Therefore, the applications of the obtained PP foams can further be extended.

Although the present invention has been explained in relation to its preferred embodiment, it is to be understood that many other possible modifications and variations can be made without departing from the spirit and scope of the invention as hereinafter claimed.

## Claims

1.    A process of preparing linear polypropylene foam, comprising the following steps:

    (a) preparing a specimen comprising at least one linear polypropylene; and at least one nucleating agent selected from the group consisting of alpha nucleating agents and beta nucleating agents;
    (b) deforming the specimen under a deforming pressure and at a deforming temperature for a period of time to obtain a deformed specimen; and
    (c) subjecting the deformed specimen obtained in the step (b) to a foaming process to obtain the linear polypropylene foam.

2.    The process of claim 1, wherein the at least one linear polypropylene has a MFR ranging from 0.1 to 20 g/10 min; or wherein the at least one linear polypropylene has a MFR ranging from 1 to 15 g/10 min; or

wherein the at least one linear polypropylene has a MFR ranging from 1.5 to 5 g/10 min.

3.  The process of claim 1 or 2, wherein the at least one linear polypropylene is selected from homopolymers of propylene; or
    wherein the at least one linear polypropylene is selected from random copolymers of propylene; or
    wherein the at least one linear polypropylene is selected from impact copolymers of propylene.

4.  The process of any of the preceding claims, wherein the at least one linear polypropylene is present in an amount of at least 80% by weight of the specimen; or
    wherein the specimen comprises the at least one linear polypropylene and at least one alpha nucleating agent; and the at least one alpha nucleating agent is present in an amount ranging from 0.01% to 5% by weight of the specimen; and/or
    wherein the specimen comprises the at least one linear polypropylene and at least one beta nucleating agent; and the at least one beta nucleating agent is present in an amount ranging from 0.01% to 2% by weight of the specimen; and/or
    wherein the specimen comprises the at least one linear polypropylene, at least one alpha nucleating agent and at least one beta nucleating agent; the at least one alpha nucleating agent is present in an amount ranging from 0.01% to 5% by weight of the specimen; and the at least one beta nucleating agent is present in an amount ranging from 0.01% to 2% by weight of the specimen.

5.  The process of any of the preceding claims, wherein the at least one alpha nucleating agent is selected from 1,3:2,4-di(3,4-dimethylbenzylidene) sorbitol, bis(4-propylbenzylidene) propyl sorbitol, monovalent, bivalent, and trivalent 2,2'-methylene-bis-(4,6-di-tertbutylphenyl) phosphate metal salts, sodium benzoate, 1,2-cyclohexanedicarboxylic acid, calcium salts, talc, and carbon nanotubes; and/or
    wherein the at least one beta nucleating agent is selected from aluminum salts of 6-quinazirin sulfonic acid, disodium salt of phthalic acid, isophthalic acid, terephthalic acid, N-N'-dicyclohexyl 2-6-naphthalene dicarboximide, and blends of
    organic dibasic acid and oxide, hydroxide, and acid of a Group II metal

6.  The process of any of the preceding claims, wherein an ultrasound treatment is further applied to the specimen to deform the specimen in the step (b).

7.  A linear polypropylene specimen, comprising:

    at least one linear polypropylene; and
    at least one nucleating agent selected from the group consisting of alpha nucleating agents and beta nucleating agents,
    wherein the linear polypropylene specimen after PIF treatment has an Izod impact strength ranging from 40 kg-cm/cm to 100 kg-cm/cm.

8.  The linear polypropylene specimen of claim 7, wherein the at least one linear polypropylene has a MFR ranging from 0.1 to 20 g/10 min; or
    wherein the at least one linear polypropylene has a MFR ranging from 1 to 15 g/10 min; or
    wherein the at least one linear polypropylene has a MFR ranging from 1.5 to 5 g/10 min; or

9.  The linear polypropylene specimen of claim 7 or 8, wherein the at least one linear polypropylene is selected from homopolymers of propylene; or
    wherein the at least one linear polypropylene is selected from random copolymers of propylene; or
    wherein the at least one linear polypropylene is selected from impact copolymers of propylene.

10. The linear polypropylene specimen of any of the claims 7 to 9, wherein the at least one linear polypropylene is present in an amount of at least 80% by weight of the linear polypropylene specimen; and/or
    wherein the linear polypropylene specimen comprises the at least one linear polypropylene and at least one alpha nucleating agent; and the at least one alpha nucleating agent is present in an amount ranging from 0.01% to 5% by weight of the linear polypropylene specimen; and/or
    wherein the linear polypropylene specimen comprises the at least one linear polypropylene and at least one beta nucleating agent; and the at least one beta nucleating agent is present in an amount ranging from 0.01% to 2% by weight of the linear polypropylene specimen; and/or wherein the linear polypropylene specimen comprises the at least one linear polypropylene, at least one alpha nucleating agent and at least one beta nucleating agent; the at least one alpha nucleating agent is present in an amount ranging from 0.01% to 5% by weight of the linear polypropylene specimen; and the at least one beta nucleating agent is present in an amount ranging from 0.01 % to 2% by weight of the linear polypropylene specimen.

11. The linear polypropylene specimen of any of the claims 7 to 10, wherein the at least one alpha nucleating agent is selected from 1,3:2,4-di(3,4-dimethylbenzylidene) sorbitol, bis(4-propylbenzylidene) propyl sorbitol, monovalent, bivalent, and trivalent 2,2'-methylene-bis-(4,6-di-tertbutylphenyl) phosphate metal salts, sodium benzoate, 1,2-cyclohexanedicarboxylic acid, calcium salts, talc, and carbon nanotubes; and/or
   wherein the at least one beta nucleating agent is selected from aluminum salts of 6-quinazirin sulfonic acid, disodium salt of phthalic acid, isophthalic acid, terephthalic acid, N-N'-dicyclohexyl 2-6-naphthalene dicarboximide, and blends of organic dibasic acid and oxide, hydroxide, and acid of a Group II metal.

12. A linear polypropylene foam, comprising:

   at least one linear polypropylene; and
   at least one nucleating agent selected from the group consisting of alpha nucleating agents and beta nucleating agents,
   wherein the linear polypropylene foam has an Izod impact strength ranging from 20 kg-cm/cm to 60 kg-cm/cm.

13. The linear polypropylene foam of claim 12, wherein the at least one linear polypropylene has a MFR ranging from 0.1 to 20 g/10 min; or
   wherein the at least one linear polypropylene has a MFR ranging from 1 to 15 g/10 min; or
   wherein the at least one linear polypropylene has a MFR ranging from 1.5 to 5 g/10 min.

14. The linear polypropylene foam of claim 12 or 13, wherein the at least one linear polypropylene is selected from homopolymers of propylene; or
   wherein the at least one linear polypropylene is selected from random copolymers of propylene; or
   wherein the at least one linear polypropylene is selected from impact copolymers of propylene.

15. The linear polypropylene foam of any of the claims 12 to 14, wherein the at least one linear polypropylene is present in an amount of at least 80% by weight of the linear polypropylene foam; and/or
   wherein the linear polypropylene foam comprises the at least one linear polypropylene and at least one alpha nucleating agent; and the at least one alpha nucleating agent is present in an amount ranging from 0.01% to 5% by weight of the linear polypropylene foam; and/or
   wherein the linear polypropylene foam comprises the at least one linear polypropylene and at least one beta nucleating agent; and the at least one beta nucleating agent is present in an amount ranging from 0.01 % to 2% by weight of the linear polypropylene foam; and/or
   wherein the linear polypropylene foam comprises the at least one linear polypropylene, at least one alpha nucleating agent and at least one beta nucleating agent; the at least one alpha nucleating agent is present in an amount ranging from 0.01 % to 5% by weight of the linear polypropylene foam; and the at least one beta nucleating agent is present in an amount ranging from 0.01% to 2% by weight of the linear polypropylene foam; and/or
   wherein the at least one alpha nucleating agent is selected from 1,3:2,4-di(3,4-dimethylbenzylidene) sorbitol, bis(4-propylbenzylidene) propyl sorbitol, monovalent, bivalent, and trivalent 2,2'-methylene-bis-(4,6-di-tertbutylphenyl) phosphate metal salts, sodium benzoate, 1,2-cyclohexanedicarboxylic acid, calcium salts, talc, and carbon nanotubes; and/or
   wherein the at least one beta nucleating agent is selected from aluminum salts of 6-quinazirin sulfonic acid, disodium salt of phthalic acid, isophthalic acid, terephthalic acid, N-N'-dicyclohexyl 2-6-naphthalene dicarboximide, and blends of organic dibasic acid and oxide, hydroxide, and acid of a Group II metal.

FIG. 1A

FIG. 1B

FIG. 2

FIG. 3A

FIG. 3B

FIG. 3C

FIG. 4A

FIG. 4B

FIG. 5A

FIG. 5B

FIG. 6

FIG. 7

FIG. 8

FIG. 9

FIG. 10

FIG.11

FIG.12

FIG.13

FIG.14

FIG.15

FIG.16

FIG. 17

FIG. 18

FIG. 19

FIG. 20

Europäisches
Patentamt
European
Patent Office
Office européen
des brevets

# EUROPEAN SEARCH REPORT

Application Number

EP 17 17 1784

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QIAN HUAN ET AL: "Markedly improving mechanical properties for isotactic polypropylene with large-size spherulites by pressure-induced flow processing", POLYMER., vol. 54, no. 3, 27 December 2012 (2012-12-27), pages 1177-1183, XP055423014, GB ISSN: 0032-3861, DOI: 10.1016/j.polymer.2012.12.055 | 7-11 | INV. B29B11/06 B29C44/34 |
| Y | * page 1178, paragraph 2. experimental * <br> * page 1180; figure 4 * | 1-6, 12-15 | |
| Y | FU DAJIONG ET AL: "Supercritical CO2foaming of pressure-induced-flow processed linear polypropylene", MATERIALS & DESIGN, ELSEVIER, AMSTERDAM, NL, vol. 93, 8 January 2016 (2016-01-08), pages 509-513, XP029394918, ISSN: 0264-1275, DOI: 10.1016/J.MATDES.2016.01.012 * the whole document * | 1-6, 12-15 | |
| X,D | EP 1 479 716 A1 (NMC SA [BE]) 24 November 2004 (2004-11-24) * paragraph [0008] * * example 4 * | 1-15 | TECHNICAL FIELDS SEARCHED (IPC) B29B B29C C08J |
| X | EP 1 816 158 A1 (BOREALIS TECH OY [FI]) 8 August 2007 (2007-08-08) * paragraphs [0015] - [0019] * * examples 5-8 * | 1-15 | |

The present search report has been drawn up for all claims

| Place of search | Date of completion of the search | Examiner |
|---|---|---|
| The Hague | 30 November 2017 | Mayer, Anne |

EPO FORM 1503 03.82 (P04C01)

## ANNEX TO THE EUROPEAN SEARCH REPORT
## ON EUROPEAN PATENT APPLICATION NO.

EP 17 17 1784

This annex lists the patent family members relating to the patent documents cited in  the above-mentioned European search report.
The members are as contained in the European Patent Office EDP file on
The European Patent Office is in no way liable for these particulars which are merely given for the purpose of information.

30-11-2017

| Patent document cited in search report | | Publication date | Patent family member(s) | | Publication date |
|---|---|---|---|---|---|
| EP 1479716 | A1 | 24-11-2004 | AT | 353351 T | 15-02-2007 |
| | | | DE 602004004650 T2 | | 08-11-2007 |
| | | | EP | 1479716 A1 | 24-11-2004 |
| | | | EP | 1625174 A1 | 15-02-2006 |
| | | | ES | 2280966 T3 | 16-09-2007 |
| | | | PT | 1625174 E | 30-04-2007 |
| | | | SI | 1625174 T1 | 30-06-2007 |
| | | | WO | 2004104075 A1 | 02-12-2004 |
| EP 1816158 | A1 | 08-08-2007 | AU | 2007214111 A1 | 16-08-2007 |
| | | | CN | 101379129 A | 04-03-2009 |
| | | | DK | 1816158 T3 | 25-04-2016 |
| | | | EP | 1816158 A1 | 08-08-2007 |
| | | | ES | 2562404 T3 | 04-03-2016 |
| | | | KR | 20080091474 A | 13-10-2008 |
| | | | TW | 200732404 A | 01-09-2007 |
| | | | WO | 2007090519 A1 | 16-08-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62401936 A
- US 58120717 A
- EP 1479716 A
- EP 0177961 A